# EUROPÄISCHE PATENTSCHRIFT

(11) **EP 1 122 907 B1**
(45) Veröffentlichungstag und Bekanntmachung des Hinweises auf die Patenterteilung: **01.08.2007**
(21) Anmeldenummer: 01101506.2
(22) Anmeldetag: 24.01.2001
(51) Int. Cl.: H04L 7/033, H04L 25/49

(54) **Verfahren zur Regeneration eines Taktsignals aus einem HDB3-codierten Eingangssignal und Taktregenerator zur Durchführung des Verfahrens**
Method for regenerating a clock signal out of a HDB3-coded input signal and clock regenerator for implementing the method
Procédé de régénération d'un signal d'horloge à partir d'un signal d'entrée codé HDB3 et régénérateur de signal d'horloge pour la mise en oeuvre du procédé

(30) Priorität: 07.02.2000 DE 10005152
(43) Veröffentlichungstag der Anmeldung: 08.08.2001
(73) Patentinhaber: T-Mobile Deutschland GmbH, 53227 Bonn (DE)
(72) Erfinder: Schmidt, Rolf, 34212 Melsungen (DE)
(74) Vertreter: Riebling, Peter

(56) Entgegenhaltungen:
- DE-A1- 3 236 283
- DE-A1- 19 722 302
- GB-A- 2 294 850

## Beschreibung

Die Erfindung betrifft ein Verfahren zur Regeneration eines Taktsignals aus einem HDB3-codierten Eingangssignal und einen Taktregenerator zur Durchführung des Verfahrens.

Im speziellen betrifft die Erfindung einen Taktregenerator in Form eines Meßgerätevorsatzes, der es ermöglicht, den Takt eines HDB3-codierten Signals zu regenerieren, um diesen Takt nachfolgend mit einem geeigneten Meßgerät genau messen zu können. Die Messung einer Taktrate kann in bekannter Weise mittels eines herkömmlichen Frequenzzählers durchgeführt werden. Da bei HDB3 Signalen der Takt mit den Daten codiert ist, ist es nicht möglich mit einem solchen Frequenzzählern den Takt direkt zu messen. Man benötigt somit ein Gerät (Vorschaltgerät), das den Takt aus dem HDB3-Signal extrahiert und als kontinuierliches Signal dem Frequenzzähler zur Verfügung stellt.

Am Markt sind Geräte erhältlich, die eine Frequenzmessung eines HDB3-Signals durchführen bzw. den Datenstrom so aufbereiten, daß eine Frequenzmessung möglich ist. Es handelt sich unter anderem um Geräte wie Sunset E1e, PA20 (Wandel und Goltermann), PA41 (Wandel und Goltermann), PRA100 (Wandel und Goltermann), Lite3000 (GN-Nettest) und Flexacom.

In der Praxis ist es wichtig, daß die Geräte neben einer hohen Genauigkeit der Messung bzw. Taktratenregenerierung über weitere Eigenschaften wie Handlichkeit, einfache Bedienung und die Möglichkeit zur Ausgabe eines detailliertes Meßprotokolls verfügen. Dabei sollen diese Geräte auch preiswert sein.

Gerade aber die Geräte, die eine hohe Genauigkeit in der Messung ermöglichen, sind im allgemeinen wenig handlich und nicht unbedingt preisgünstig.

Eine kostengünstige Möglichkeit zur Messung der Taktrate besteht darin, bekannte Frequenzzähler z.B. der Typen RACAL-DANA und FLUKE, die über IEEE steuerbar sind, zu verwenden, wobei man zusätzlich lediglich eine Komponente benötigt, die das HDB3-Signal aufschlüsselt, den darin enthaltenen Takt extrahiert und diesen dann als kontinuierliches Signal dem Frequenzzähler zur Verfügung stellt. Diese Komponente sollte dabei sehr einfach in der Anwendung und kostengünstig sein.

Die Veröffentlichung DE 32 36 283 A1 offenbart einen Decoder zur Codierung eines binären optischen HDB3-codierten Eingangssignals in ein ternäres HDB3 Signal. Mit Hilfe eines Phasenregelkreises PLL wird ein Phasenvergleich zwischen der fallenden Flanke des ankommenden binären Eingangssignals und der steigenden Flanke eines geteilten Ausgangssignals des Phasenregelkreises durchgeführt. Mit diesem Decoder lassen sich allerdings nur Eingangssignale mit den Bitkombinationen 11, 00 und 01 decodieren.

Die Aufgabe der Erfindung liegt darin, ein Verfahren zur Regeneration eines Taktsignals aus einem HDB3-codierten Eingangssignal und einen Taktregenerator zur Durchführung des Verfahrens vorzuschlagen, welcher den Takt der für eine genaue Frequenzmessung aufbereitet ohne die Funktion der Leitung zu stören oder zu unterbrechen. Dabei sollte eine hohe Genauigkeit, gute Handlichkeit und einfache Bedienung erreicht werden und Langzeitmessungen und kurze Funktionchecks möglich sein, wobei das Gerät vor allem preisgünstig sein soll. Ferner soll eine hohe Takt-Regenerationsgenauigkeit und eine schnelle Einschwingzeit (sofortige Meßbereitschaft) erzielt werden.

Diese Aufgabe wird erfindungsgemäß durch die Merkmale der unabhängigen Patentansprüche gelöst.

Das Herz des Taktregenerators wird durch die PLL-Regelschleife und die Steuereinheit (nachfolgend auch PLL-Steuereinheit) gebildet, welche den Phasenkomparator sperrt, wenn eine Impulslücke des Eingangssignals ansteht.

Die Steuereinheit spricht auf die jeweils steigende Flanke des aufbereiteten Signals (HDB3=) an. Wird eine steigende Flanke detektiert, so gibt die Steuereinheit den Phasenkomparator frei, wonach dieser die nächstfolgende fallende Flanke des aufbereiteten Eingangssignals mit der nächstfolgende steigenden Flanke des Ausgangssignals des VCO vergleicht. Gleichzeitig wird die Steuereinheit zurückgesetzt und wartet auf die nächste steigenden Flanke des aufbereiteten Eingangssignals. Bis zur nächsten steigenden Flanke ist der Phasenkomparator deaktiviert, d.h. während einer Impulslücke des aufbereiteten Eingangssignals findet kein Phasenvergleich statt. Dadurch wird verhindert, daß die PLL bzw. der VCO in der Impulslücke eine "falsche" Steuerspannung erhält und aus dem Takt gerät.

Der erfindungsgemäße Taktregenerator bietet eine hochohmige Anschaltung an eine signalführende Leitung ohne Störungen zu verursachen. Ferner wird vorteilhaft eine hohe Taktregegenerationsgenauigkeit und schnelle Einschwingzeit erreicht. Das Gerät ist leicht zu bedienen, erfordert keinen Abgleich und ist sehr preisgünstig in der Herstellung.

In einer bevorzugten Ausbildung wird die Steuerspannung für den VCO durch ein PID-Regelglied aus dem Komparatorsignal generiert.

Je nach Anwendungszweck ist vorgesehen, daß das Eingangssignal entweder vor oder nach der Umwandlung in ein unsymmetrisches Signal gleichgerichtet wird.

Eine Weiterbildung der Erfindung sieht vor, das Gerät als Zweikanalgerät auszubilden, da so die Frequenzmessung für die Hin- und Rückrichtung zur gleichen Zeit möglich ist. So können Frequenzunterschiede der Hin- und Rückrichtung, die zu 2Mbit-Ausfällen führen können, besser ermittelt werden.

Nachfolgend wird die Erfindung anhand eines Ausführungsbeispiels unter Bezugnahme aus mehrere Zeichnungsfiguren beschrieben. Aus den Zeichnungen und ihrer Beschreibung ergeben sich weitere Merkmale und Vorteile der Erfindung. Es zeigen:
- Fig 1:: Schaltplan des erfindungsgemäßen Taktregenerators
- Fig 2:: Schaltplan einer alternativen Ausführung der Aufbereitungsstufe für das Eingangssignal:
- Fig 3:: Schematisiert dargestellte ideale Signalverläufe im Taktregenerator.
- Figuren 4 -9:: Signalformen, abgenommen mit einem Oszilloskop an verschiedenen

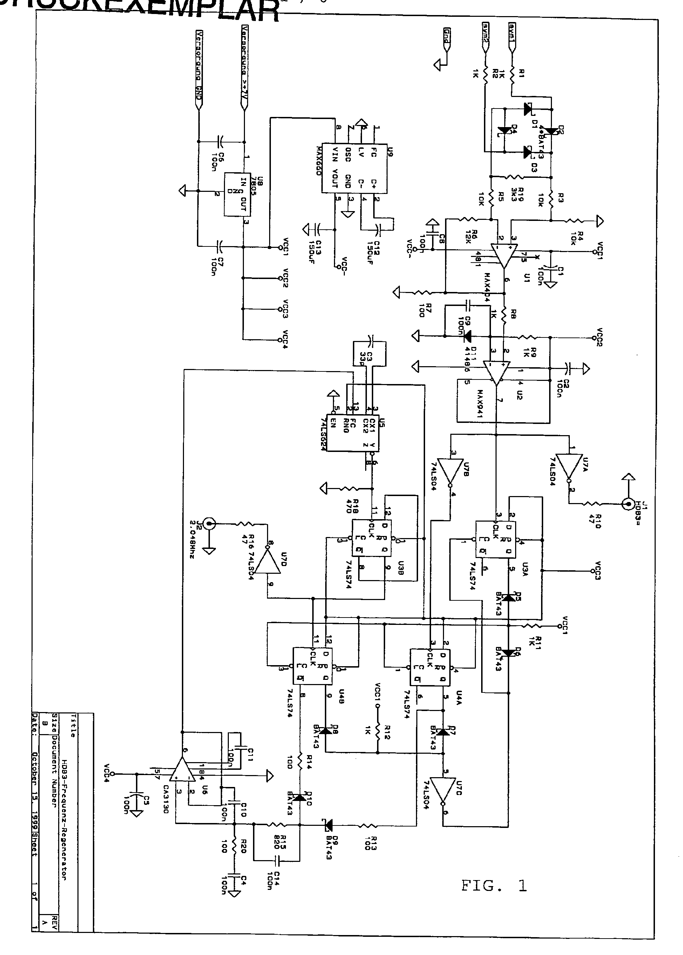

### Stellen der Schaltung nach Figur 1.

Bei der nachfolgenden Betrachtung wird von einem 2Mbit HDB3-Datenstrom vorausgesetzt, aus dem das zugehörige 2.048 MHz Taktsignal regeneriert werden soll. Andere Bit- bzw. Taktraten sind ebenfalls möglich und bedürfen nur der Anpassung einiger Schaltungsparameter.

Die Entwicklung basiert auf der Wirkungsweise einer PLL (Phase Lock Loop - Phasenregelschleife), die einen Oszillator phasen- und frequenzrichtig an ein Signal anbindet. In dieser Schaltung wird nun ein VCO (Voltage-Controlled Oszillator - spannungsgesteuerter Oszillator) an die Phase und die Frequenz eines 2Mbit HDB3-Signals gekoppelt.

Das HDB3 Signal besteht aus positiven (+3V) und negativen (-3V) Impulsen, sowie aus 0V als dritten Pegel. Die Impulse haben eine vorgegebene Form, die in der Spezifikation G.703 näher beschrieben ist und die in vorgegebenen Zeitabständen (spätestens nach 3 Bit mit 0V) immer wieder auftreten.

Diese Konventionen werden in der Entwicklung ausgenutzt, um eine Regeneration des Taktes zu ermöglichen.

Die Schaltung des Taktregenerators besteht im wesentlichen aus fünf Komponenten:
Eingangsstufe, PLL-Steuerstufe, Phasenvergleicher mit Loop-Filter, Spannungsgesteuerter Oszillator (VCO) und Spannungsversorgung

### HDB3 Signalaufbereitung:

Das symmetrische HDB3-Eingangssignal HDB3 wird hochohmig von einer Leitung abgegriffen und mittels einem diskret aufgebauten Dioden-Brückengleichrichter D1-D4 gleichgerichtet. Dieses gleichgerichtete und immer noch symmetrische Signal wird mit einem Differenzverstärker U1 in ein unsymmetrisches Signal gewandelt, welches proportional des gleichgerichteten symmetrischen HDB3-Signals ist. Dieses analoge Signal wird, wegen der besseren Möglichkeit der Nachverarbeitung, mittels eines Komparators U2 in ein digitales TTL- bzw. CMOS-kompatibles Signal gewandelt. Dieses aufbereitete Signal HDB3= steht an Ausgang J1 zu Testzwecken zur Verfügung.

### PLL-Steuereinheit:

Die PLL-Steuereinheit besteht im wesentlichen aus Baustein U3A (D-Flip-Flop) und diesem zugeordneten Bauteilen. Die Steuereinheit erzeugt ein Signal, welches den Phasenkomparator der PLL deaktiviert, wenn eine Impulslücke des HDB3-Signals ansteht.

Das aufbereitete HDB3= -Signal wird auf den CLK-Eingang des Flip-Flops U3A gegeben, wobei jeweils nur die steigende Flanke des HDB3= -Signals am nicht invertierten Ausgang Q von U3A einen H-Pegel erzeugt, welcher den Phasenkomparator, im wesentlichen bestehend aus den Bausteinen U4A und U4B, für einen Vergleich auf der fallenden Flanke des HDB3= -Signals freigibt, dadurch daß der Reset-Eingang der Bausteine U4A und U4B auf H-Pegel gezogen werden.

### PLL (inkl. Loop-Filter):

Es handelt sich hierbei um einen Phasendetektor mit Vorzeichengedächtnis, d.h. einen frequenzempfindlichen Phasendetektor im wesentlichen gebildet durch die Bausteine U4A und U4B (D-Flip-Flops), der die fallende Flanke des HDB3= -Signals mit der steigenden Flanke eines von einem spannungsgesteuerten Oszillator U5 erzeugten Signals vergleicht. Am CLK-Eingang des Bausteins U4A liegt das invertierte HDB3= -Signal, invertiert deshalb, weil U3A eigentlich auf die steigende Flanke reagiert. Am CLK-Eingang des Bausteins U4B liegt das durch den Teiler U3B durch 2 geteilte Ausgangssignal des VCO (Baustein U5).

Der Vergleich durch die Bausteine U4A und U4B wird nur dann durchgeführt, wenn die PLL-Steuereinheit U3A durch Setzen des Ausgangs Q auf High-Pegel die Freigabe hierfür erteilt hat.

In dem Loop-Filter, gruppiert um den Baustein U6 (Operationsverstärker) wird aus den Ausgangssignalen des Phasendetektors eine Steuerspannung für den VCO erzeugt. Der Loop-Filter ist als PID-Regler ausgebildet, welcher die durch ein Dioden-Oder-Glied verknüpften Ausgangssignale der Bausteine U4A und U4B zu einer Steuerspannung für den VCO umformt.

### Spannungsgesteuerter Oszillator (VCO)

Es wird ein Chip-VCO (U5) verwendet, der eine Grundfrequenz von ca. 4Mhz erzeugt. Dieses Signal wird, bevor es dem Phasendetektor zugeführt wird, von dem Baustein U3B durch zwei geteilt und stellt somit einen ca. 2 Mhz-Takt zur Verfügung, der dann mit Hilfe der Steuerspannung des Komparators bzw.
Loop-Filters frequenz- und phasenstarr an das Eingangssignal gekoppelt wird, indem die Phase und Frequenz des VCO entsprechend an den Takt des HDB3-Eingangssignals angeglichen wird. Dieses Ausgangssignal des VCO bzw. des Teilers U3B ist auch jenes, das am Ausgang für eine Frequenzmessung zur Verfügung gestellt wird.

### Spannungsversorgung:

Aus einer Eingangsspannung (Betriebsspannung) von mindestens ca. +7V wird mittels eines Spannungsreglerbausteins U8 eine Spannung von +5V erzeugt. Aus den +5V wird mittels einer Ladungspumpe U9 eine Spannung von -5V erzeugt. Zur Versorgung der Schaltung stehen somit +- 5Volt zur Verfügung.

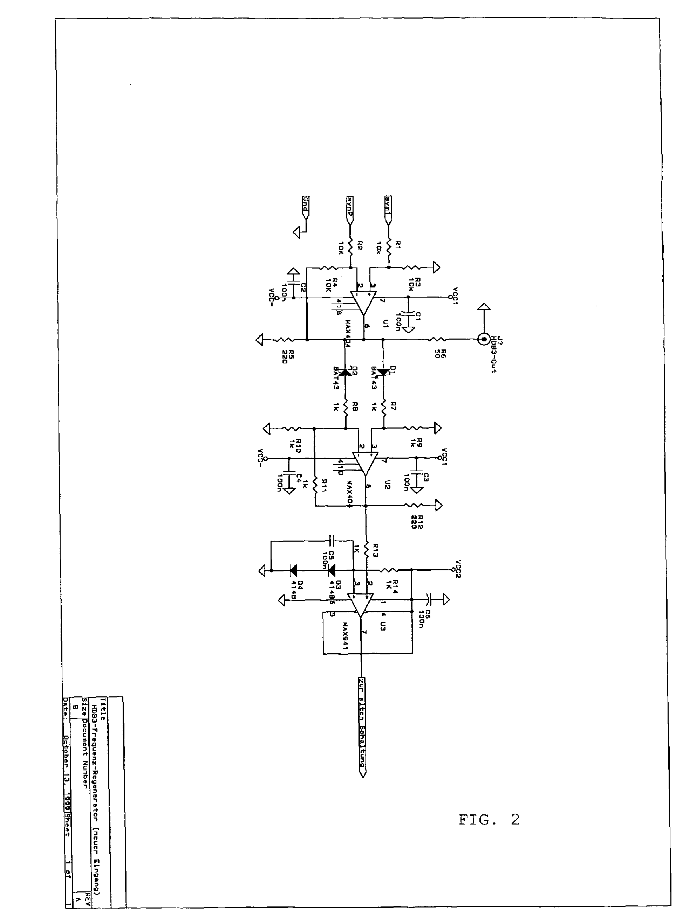

Eine Modifikation gemäß Figur 2 sieht vor, die Eingangsschaltung in der Weise zu ändern, daß zuerst aus dem symmetrischen HDB3-Signal ein unsymmetrisches Signal erzeugt wird, welches die eins zu eins Abbildung des HDB3-Signals ist (bei weiterhin hochohmiger Ankopplung). Dies ermöglicht eine genaue Betrachtung der Impulsform des HDB3-Signals mittels eines Oszilloskop, ohne die Funktionsweise der Leitung zu stören. Auf diese Weise können Fehler in der Leitungsführung der 2Mbit-Leitung erkannt und bestimmt werden, die sich immer in der Impulsform des Signals niederschlagen (G.703 Maske). Dieses unsymmetrische Signal wird dann gleichgerichtet und dem Komparator zur Analog- Digitalwandlung zugeführt. Der Rest der Schaltung bleibt unverändert.

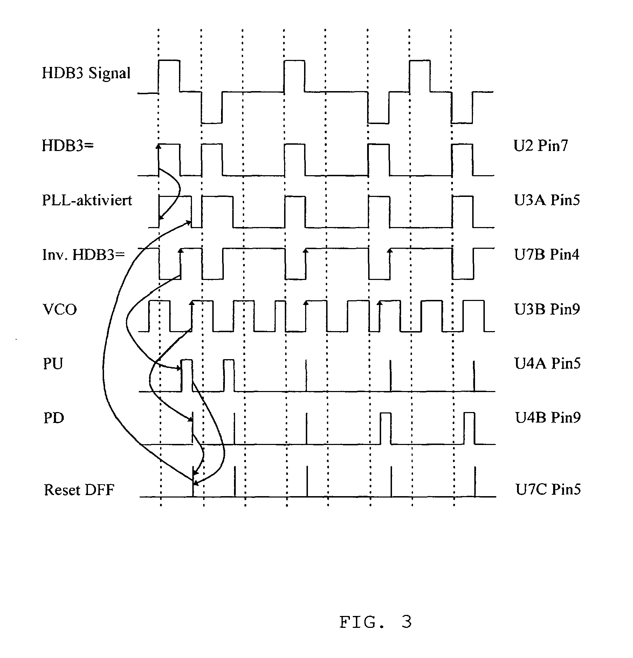

Figur 3 zeigt die idealisierten Signalverläufe in der Schaltung.
Ganz oben ist das HDB3-Eingangssignal dargestellt.

Die steigende Flanke des gleichgerichteten Signals HDB3= (U2, Pin7) setzt das Signal PLL-aktiviert an U3A, Pin 5.
Die Flip-Flops U4A und U4B zur Erzeugung der Signale PU (U4A, Pin 5) und PD (U4B, Pin 9) reagieren nur dann auf steigende Flanken des invertierten Eingangssignals Inv. HDB3= (U7B, Pin 4) bzw. des Ausgangssignals VCO (U3B, Pin 9), wenn das Signal PLL-aktiviert auf HIGH ist. Ist dieses Signal LOW, liegt ein Dauer-Reset an den Reset Eingängen der Flip-Flops U4A und U4B an.
Die steigende Flanke des Signals Inv.HDB3= bzw. VCO setzt das zugehörige Flip-Flop U4A bzw. U4B, wenn PLL-aktiviert HIGH ist.
Sind beide Flip-Flops U4A und U4B gesetzt, d.h. PU und PD sind HIGH, geht das Signal PLL-aktiviert auf LOW und es werden damit auch die Flip Flops bzw. die Signale PU und PD zurück gesetzt.
Die pulsbreitenmodulierten Signale von PU und PD werden zusammengeführt und über ein LOOP-Filter dem VCO (U5) als Regelspannung an Pin 13 zur Verfügung gestellt.

Die Zusammenführung von dem PLL-aktiviert Signal (U3A Pin5) und dem Reset Signal für die Flip-Flops U4A und U4B RESET DFF (U7C Pin5), über die Dioden D5 und D6, dient lediglich dazu, die PU und PD-Flip-Flops möglichst schnell zurückzusetzen wenn beide Signale (PU, PD) High sind, um die Glitsches auf PU und PD, möglichst kurz zu halten.

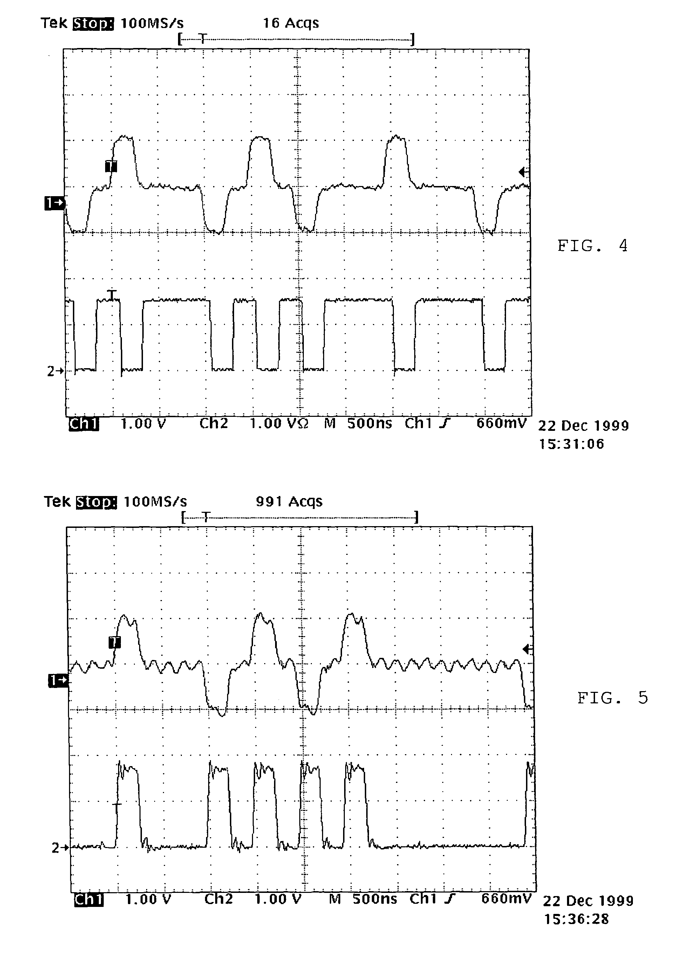

Die Figuren 4 bis 9 zeigen Signalformen, abgenommen an verschiedenen Stellen der Schaltung mit einem Oszilloskop. Die obere Kurve zeigt jeweils das an Kanal 1 (Ch1) anliegende Signal, die untere Kurve das an Kanal 2 (Ch2) anliegende Signal.
Zu bemerken ist, daß die Phasenregelschleife während den Messungen eingerastet ist.

In Figur 4 zeigt:
CH1 - Ein HDB3 Eingangssignal aus einem 2Mbit Generator;
CH2 - Das aufbereitete, invertierte Eingangssignal (HDB3=) der Schaltung
(U7A Pin2).

In Figur 5 zeigt:
CH1 - Ein HDB3 Eingangssignal aus einem 2Mbit Generator;
CH2 - Das HDB3 Signal am Ausgang des ersten Operationsverstärkers (U1 Pin6).

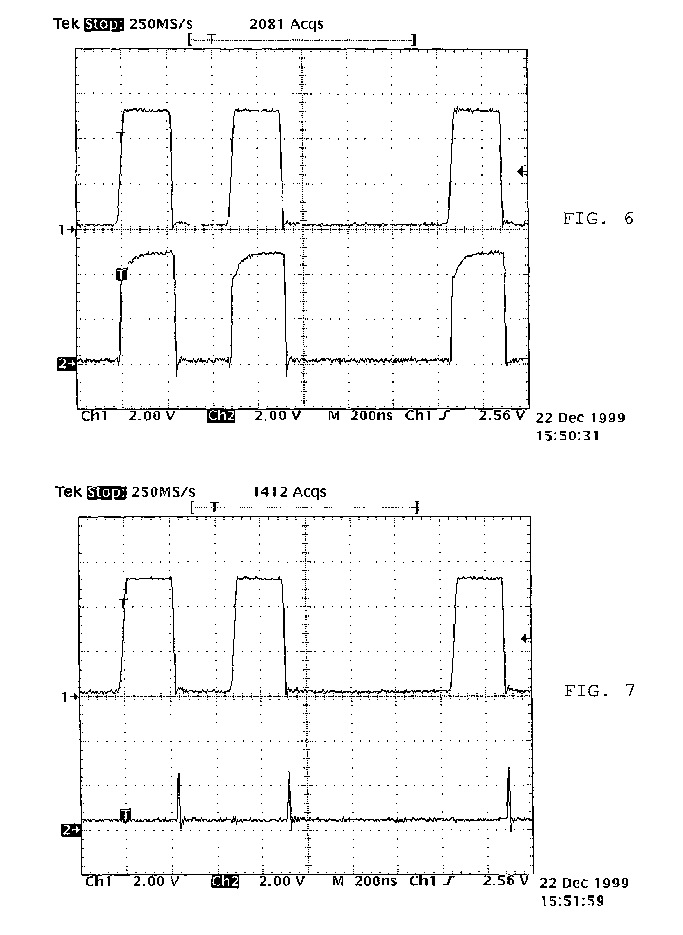

In Figur 6 zeigt:
CH1 - Das aufbereitete HDB3= -Signal (U2 Pin7);
CH2 - Das PLL Freigabesignal (U3A Pin5).

In Figur 7 zeigt:
CH1 - Das aufbereitete HDB3= -Signal (U2 Pin7)
CH2 - Den Phasenkomparator Ausgang (HDB3 Seite U4A Pin5), Man erkennt Glitsches, weil nur noch eine minimale Nachregelung vorliegt.

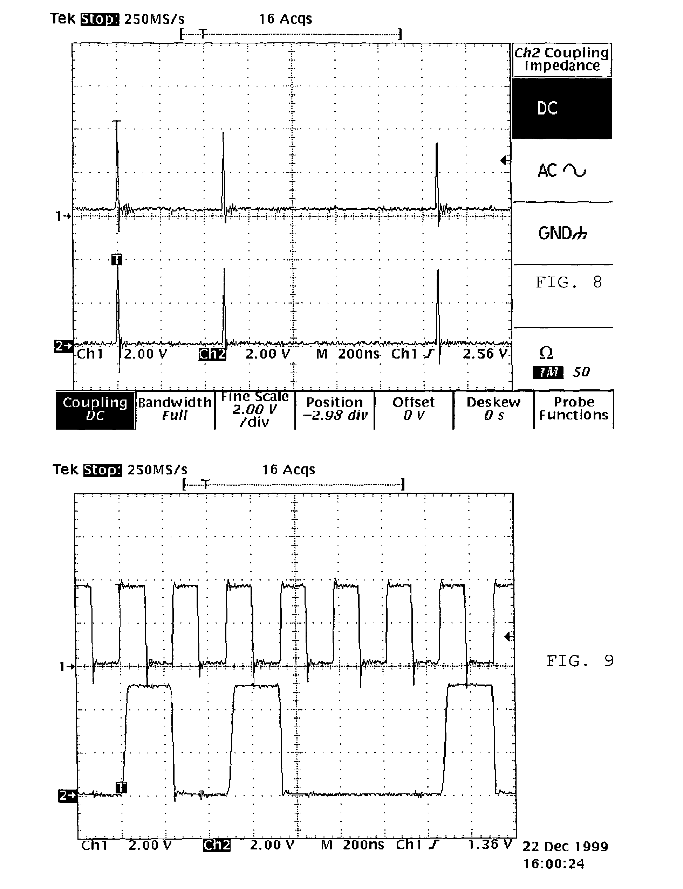

In Figur 8 zeigt:
CH1 - Den Phasenkomparator Ausgang (HDB3 Seite U4A Pin5). Man erkennt Glitsches, weil nur noch minimale Nachregelung.
CH2 - Den Phasenkomparator Ausgang (VCO Seite U4B Pin9). Ebenfalls Glitsches, weil nur noch minimale Nachregelung.

In Figur 9 zeigt:
CH1 - Das VCO-Ausgangssignal (U5 Pin6);
CH2 - Das aufbereitete HDB3= Eingangssignal (U2 Pin7).

## Patentansprüche

1. Verfahren zur Regeneration eines Taktsignals mit einer Frequenz f* aus einem HDB3-codierten symmetrischen Eingangssignal (HDB3), mit folgenden Schritten:
Gleichrichten und Umwandeln des Eingangssignals (HDB3) in ein unsymmetrisches, dem Eingangssignal proportionales aufbereitetes Eingangssignal (HDB3=);
Generieren eines Oszillatorsignals Osc mit einer Frequenz f mittels eines spannungsgesteuerten Oszillators VCO; **gekennzeichnet dadurch**
**dass** bei einer Detektion einer steigenden Flanke des aufbereiteten Eingangssignals (HDB3=) durch eine Steuerstufe ein Phasenkomparator freigegeben wird, wobei mittels des Phasenkomparators die nächstfolgende fallende Flanke des aufbereiteten Eingangssignals (HDB3=) mit der nächstfolgenden steigenden Flanke des Oszillatorsignals Osc des VCO verglichen wird und ein Komparatorsignals erzeugt wird, wobei der Phasenkomparator durch die Steuerstufe immer dann deaktiviert und der Vergleich nicht durchgeführt wird, wenn eine Impulslücke des Eingangssignals ansteht; und
Erzeugen einer Steuerspannung für den VCO durch ein Loop-Filter aus dem gefilterten Komparatorsignal des Phasenkomparators, wobei die Frequenz f des Oszillators anhand der Steuerspannung phasenrichtig auf die Frequenz f* des Eingangssignals eingestellt wird.

2. Verfahren nach Anspruch 1, **dadurch gekennzeichnet, daß** die Steuerstufe auf jede steigende Flanke des aufbereiteten Eingangssignals anspricht und **dadurch** den Phasenkomparator für die Detektion der nächstfolgenden Flanke jeweils des aufbereitetem Eingangssignals und des Oszillatorsignals aktiviert.

3. Verfahren nach Anspruch 1 oder 2, **dadurch gekennzeichnet, daß** die Steuerspannung des Loop-Filters durch ein PID-Regelglied aus dem Komparatorsignal generiert wird.

4. Verfahren nach einem der Ansprüche 1 bis 3, **dadurch gekennzeichnet, daß** das Eingangssignal vor der Umwandlung in ein unsymmetrisches Signal gleichgerichtet wird.

5. Verfahren nach einem der Ansprüche 1 bis 3, **dadurch gekennzeichnet, daß** das Eingangssignal nach Umwandlung in ein unsymmetrisches Signal gleichgerichtet wird.

6. Taktregenerator für ein Taktsignal mit einer Frequenz f* aus einem HDB3-codierten symmetrischen Eingangssignal (HDB3), welcher umfasst:
eine Eingangsstufe zur Gleichrichtung und zur Umwandlung des symmetrischen Eingangssignals in ein dem Eingangssignal proportionales unsymmetrisches aufbereitetes Eingangssignal (HDB3=),
einen spannungsgesteuerten Oszillator (VCO) zur Erzeugung eines Oszillatorsignals Osc mit einer Frequenz f; **gekennzeichnet durch**
einen Phasenkomparator zum Vergleichen der auf eine steigende Flanke des aufbereiteten Eingangssignals (HDB3=) nächstfolgenden fallenden Flanke mit der nächstfolgenden steigenden Flanke des Oszillatorsignals Osc des VCO und zum Erzeugen eines Komparatorsignals;
ein Loop-Filter zur Bereitstellung einer Steuerspannung für den VCO aus dem gefilterten Komparatorsignal des Phasenkomparators, wobei die Frequenz f des Oszillators anhand des Steuersignals phasenrichtig auf die Frequenz f* des Eingangssignals eingestellt wird; und
eine Steuerstufe, welche den Phasenkomparator nur bei der steigenden Flanke des aufbereiteten Eingangssignals (HDB3=) freigibt und immer dann deaktiviert, wenn eine Impulslücke des Eingangssignals ansteht.

7. Taktregenerator nach Anspruch 6, **dadurch gekennzeichnet, daß** der Taktregenerator als Zweikanalgerät ausgebildet ist.

8. Taktregenerator nach Anspruch 6 oder 7, **dadurch gekennzeichnet, daß** das Loop-Filter eine PID-Regelcharakteristik aufweist.

## Claims

1. Method for regenerating a timing signal of frequency f* from a HDB3-encoded symmetric input signal (HDB3) having the following steps:
rectifying and converting the input signal (HDB3) into an asymmetric edited input signal (HDB3=) proportional to the input signal;
generating an oscillator signal Osc of frequency f by means of a voltage-controlled oscillator VCO;
**characterised in that** on detection of a rising edge of the edited input signal (HDB3=) a phase comparator is released by a control stage, wherein by means of the phase comparator the next succeeding falling edge of the edited input signal (HDB3=) is compared with the next succeeding rising edge of the oscillator signal Osc from the VCO and a comparator signal is generated, wherein the phase comparator is deactivated by the control stage and the comparison not carried out whenever a pulse gap in the input signal is applied; and
generating a control voltage for the VCO by a loop filter from the filtered comparator signal from the phase comparator, wherein the frequency f of the oscillator is set with correct phase to the frequency f* of the input signal on the basis of the control voltage.

2. Method according to claim 1, **characterised in that** the control stage responds to each rising edge of the edited input signal and by this means activates the phase comparator for the detection of the next succeeding edge in each case of the edited input signal and of the oscillator signal.

3. Method according to claim 1 or 2, **characterised in that** the control voltage of the loop filter is generated by a PID control member from the comparator signal.

4. Method according to any of claims 1 to 3, **characterised in that** the input signal is rectified before conversion into an asymmetric signal.

5. Method according to any of claims 1 to 3, **characterised in that** the input signal is rectified after conversion into an asymmetric signal.

6. Timing regenerator for a timing signal of frequency f* from a HDB3-encoded symmetric input signal (HDB3), which generator comprises:
an input stage for rectification and for conversion of the symmetric input signal into an asymmetric edited input signal (HDB3=) proportional to the input signal,
a voltage-controlled oscillator (VCO) for generating an oscillator signal Osc of frequency f;
**characterised by** a phase comparator for comparing the falling edge next succeeding a rising edge of the edited input signal (HDB3=) with the next succeeding rising edge of the oscillator signal Osc from the VCO and for generating a comparator signal;
a loop filter for providing a control voltage for the VCO from the filtered comparator signal from the phase comparator, wherein the frequency f of the oscillator is set with correct phase to the frequency f* of the input signal on the basis of the control signal; and
a control stage which releases the phase comparator only on occurrence of the rising edge of the edited input signal (HDB3=) and always deactivates it when a pulse gap in the input signal is applied.

7. Timing regenerator according to claim 6, **characterised in that** the timing regenerator is constructed in the form of a dual channel device.

8. Timing regenerator according to claim 6 or 7,
**characterised in that** the loop filter has a PID control characteristic.

## Revendications

1. Procédé pour régénérer un signal d'horloge d'une fréquence f* à partir d'un signal d'entrée symétrique à codage HDB3 (HDB3), avec les étapes suivantes :
redressement et conversion du signal d'entrée (HDB3) en un signal d'entrée traité (HDB3=) asymétrique et proportionnel au signal d'entrée ;
production d'un signal d'oscillateur Osc d'une fréquence f à l'aide d'un oscillateur commandé par tension VCO ;
**caractérisé en ce que** lors de la détection d'un flanc montant du signal d'entrée traité (HDB3=), un comparateur de phase est débloqué grâce à un maître-oscillateur, étant précisé qu'à l'aide du comparateur de phase, le flanc descendant suivant du signal d'entrée traité (HDB3=) est comparé au flanc montant suivant du signal d'oscillateur Osc du VCO et un signal de comparateur est généré, et qu'à chaque vide d'impulsion du signal d'entrée, le comparateur de phase est désactivé par le maître-oscillateur et la comparaison n'est pas effectuée ; et
production d'une tension de commande pour le VCO grâce à un filtre de boucle à partir du signal de comparateur filtré du comparateur de phase, la fréquence f de l'oscillateur étant réglée suivant la bonne phase à la fréquence f* du signal d'entrée grâce à la tension de commande.

2. Procédé selon la revendication 1, **caractérisé en ce que** le maître-oscillateur réagit à chaque flanc montant du signal d'entrée traité et active ainsi le comparateur de phase pour la détection du flanc suivant du signal d'entrée traité et du signal d'oscillateur.

3. Procédé selon la revendication 1 ou 2, **caractérisé en ce que** la tension de commande du filtre de boucle est générée par un régulateur à triple action à partir du signal de comparateur.

4. Procédé selon l'une des revendications 1 à 3, **caractérisé en ce que** le signal d'entrée est redressé avant la conversion en signal asymétrique.

5. Procédé selon l'une des revendications 1 à 3, **caractérisé en ce que** le signal d'entrée est redressé après la conversion en signal asymétrique.

6. Régénérateur de signal d'horloge pour un signal d'horloge d'une fréquence f* à partir d'un signal d'entrée symétrique à codage HDB3 (HDB3), qui comprend :
un niveau d'entrée pour le redressement et la conversion du signal d'entrée symétrique en un signal d'entrée traité (HDB3=) asymétrique et proportionnel au signal d'entrée ;
un oscillateur commandé par tension (VCO) pour la production d'un signal d'oscillateur Osc d'une fréquence f ;
**caractérisé par** un maître-oscillateur pour comparer le flanc descendant qui suit un flanc montant du signal d'entrée traité (HDB3=) au flanc montant suivant du signal d'oscillateur Osc du VCO et pour produire un signal de comparateur ;
un filtre de boucle pour fournir une tension de commande pour le VCO à partir du signal de comparateur filtré du comparateur de phase, la fréquence f de l'oscillateur étant réglée suivant la bonne phase à la fréquence f* du signal d'entrée grâce au signal de commande ; et
un maître-oscillateur qui ne débloque le comparateur de phase qu'en présence du flanc montant du signal d'entrée traité (HDB3=) et le désactive à chaque vide d'impulsion du signal d'entrée.

7. Régénérateur de signal d'horloge selon la revendication 6, **caractérisé en ce qu'**il est conçu comme un appareil à deux voies.

8. Régénérateur de signal d'horloge selon la revendication 6 ou 7, **caractérisé en ce que** le filtre de boucle présente une caractéristique de régulation à triple action.
